# EUROPÄISCHE PATENTSCHRIFT

(11) **EP 1 045 769 B1**
(45) Veröffentlichungstag und Bekanntmachung des Hinweises auf die Patenterteilung: **22.10.2003**
(21) Anmeldenummer: 98965227.6
(22) Anmeldetag: 03.12.1998
(51) Int. Cl.: B60H 1/28

(54) **LUFTEINTRITT FÜR EINE HEIZUNGS- ODER KLIMAANLAGE EINES KRAFTFAHRZEUGES**
AIR INLET FOR A HEATING OR AIR CONDITIONING INSTALLATION IN AN MOTOR VEHICLE
ENTREE D'AIR POUR L'INSTALLATION DE CHAUFFAGE OU DE CLIMATISATION D'UN VEHICULE AUTOMOBILE

(30) Priorität: 18.12.1997 DE 19756346
(43) Veröffentlichungstag der Anmeldung: 25.10.2000
(73) Patentinhaber: Bayerische Motoren Werke Aktiengesellschaft, 80788 München (DE)
(72) Erfinder: SCHLAUDRAFF, Ernst, D-81245 München (DE)
(86) Internationale Anmeldenummer: EP9807869
(87) Internationale Veröffentlichungsnummer: WO99032310

(56) Entgegenhaltungen:
- EP-A- 0 301 494
- FR-A- 1 165 665
- FR-A- 1 398 105
- GB-A- 922 894

## Beschreibung

Die Erfindung bezieht sich auf einen Lufteintritt für eine Heizungs- oder Klimaanlage eines Kraftfahrzeuges nach dem Oberbegriff der Ansprüche 1, 2, 3 oder 5.

Bei den bekannten Lufteintritten wird im Stillstand und bei geringer Geschwindigkeit des Fahrzeuges ein Gebläse eingesetzt, um einen Luftdurchsatz im Inneren des Kraftfahrzeuges zu erzeugen, während sich mit zunehmender Fahrgeschwindigkeit im Bereich unterhalb der Windschutzscheibe, dem sogenannten Windlauf, ein Staudruck ausbildet, durch den die Außenluft selbsttätig in die Heizungs- oder Klimaanlage eintritt. Dieser Staudruck ist geschwindigkeitsabhängig, so daß bei höheren Fahrzeuggeschwindigkeiten der Lufteinlaß gedrosselt werden muß, um unerwünscht hohen Strömungsgeschwindigkeiten im Fahrzeuginnenraum entgegenzuwirken. Die Drosselung kann manuell erfolgen, wie beispielsweise aus der DE 44 14 036 A1 bekannt, oder durch eine automatische, geschwindigkeitsabhängige Regelung. Die Drosselung bedingt einen zusätzlichen Aufwand, insbesondere im Fall der aus Komfortgründen zu bevorzugenden selbsttätigen Regelung, bei der eine präzise, hysteresearme Kinematik erforderlich ist, um eine exakt reproduzierbare Position der Drosselklappe zu erreichen, da bei hohen Fahrzeuggeschwindigkeiten nur mehr kleine Durchlaßquerschnitte verbleiben. Außerdem können die bei höheren Fahrzeuggeschwindigkeiten stark gedrosselten Querschnitte Ausgangspunkt für Geräusche im Lufteintrittsbereich sein.

Bei vielen Fahrzeugen sind die Lufteintritte im seitlichen Randbereich der Windschutzscheibe angeordnet, da sich hier ein geringerer Staudruck einstellt, wie beispielsweise aus der Darstellung der Figuren 1 und 2 der FR 1,165,665 A hervorgeht. Dennoch ist bei höheren Fahrzeuggeschwindigkeiten auch bei außenliegenden Lufteinlässen der Staudruck in der Regel so groß, daß eine Drosselung erforderlich ist.

Aufgabe der Erfindung ist es, einen einfach aufgebauten Lufteintritt für ein Kraftfahrzeug bereitzustellen, bei dem der Staudruck von der Fahrzeuggeschwindigkeit im wesentlichen unabhängig ist.

Diese Aufgabe wird durch die Merkmale der Ansprüche 1, 2, 3 oder 5 gelöst.

Gemäß Anspruch 1 wird die Lufteintrittsöffnung gegenüber dem Bereich, in dem sich während der Fahrt des Kraftfahrzeuges ein Überdruck zum Fahrzeuginnenraum ausbildet, isoliert und die Außenluft aus einem Bereich mit niedrigem Druckniveau zugeführt, beispielsweise aus dem seitlichen Bereich des Windlaufes der Fahrzeugkarosserie, wo sich bei Fahrt des Kraftfahrzeuges in Bezug auf den Fahrzeuginnenraum ein geringerer Staudruck einstellt (siehe FR 1,165,665 A). Hierdurch wird das Druckniveau an der Lufteintrittsöffnung reduziert, so daß mit steigender Fahrzeuggeschwindigkeit der Luftdurchsatz nicht oder nur verhältnismäßig gering ansteigt. Angesichts der Tatsache, daß bei höheren Fahrgeschwindigkeiten ein leicht erhöhter Luftdurchsatz sogar erwünscht ist, kann bei dem erifndungsgemäßen Lufteintritt eine Stauluftklappe entfallen.

Aus der GB 922,894 sind zwar gattungsgemäße Lufteintrittsöffnungen im seitlichen Randbereich unterhalb der Windschutzscheibe bekannt, wie oben im Zusammenhang mit der FR 1,165,665 A unter Hinweis auf bekannte Fahrzeuge erwähnt. Die GB 922,894 weist jedoch keine Einrichtungen im Bereich dieser Lufteintrittsöffnungen auf, durch die diese Lufteintrittsöffnungen gegen ein Gebiet mit relativ hohem Staudruck abgeschottet werden, unter gleichzeitiger Luftzufuhr aus einem Bereich des Kraftfahrzeuges, in dem während der Fahrt ein relativ niedriger Druck herrscht.

Gemäß Anspruch 2 besteht die Einrichtung aus einer Abdeckung über der Lufteintrittsöffnung, die lediglich zu einem Seitenbereich der Karosserie hin offen ist.

Bei modernen Kraftfahrzeugen befinden sich die Lufteintrittsöffnungen oftmals verdeckt im Bereich unterhalb der rückwärtigen Endabschnitte der Frontklappe. Bei einer derartigen Anordnung kann die Erfindung gemäß Anspruch 3 in besonders einfacher Weise durch Einbringung einer Schottwand zur Abdichtung des Spaltes zwischen Frontklappe und Windschutzscheibe realisiert werden. Selbstverständlich ist auch eine Abschottung des Kanalquerschnittes zur Fahrzeugmitte hin erforderlich, um die Lufteintrittsöffnung gegenüber diesem Bereich hohen Staudrucks zu isolieren. Die erfindungsgemäße Abschottung ist von außerhalb des Fahrzeuges kaum sichtbar und kann mit geringem Aufwand sowohl bei neuen Fahrzeugmodellen vorgesehen als auch bei bestehenden Fahrzeugen nachgerüstet werden.

Unterhalb des rückwärtigen Endabschnittes der Frontklappe sind in vielen Fällen die Scheibenwischer zur Reinigung der Windschutzscheibe verdeckt angeordnet. Bei paarweise ausgebildeten Scheibenwischern ist die Antriebsachse des fahrerseitigen Wischers dabei in der Regel fahrzeugaußenseitig angeordnet, so daß bei einer Ausbildung der Erfindung nach Anspruch 2 oder 3 die oberhalb der Lufteintrittsöffnung verlaufende Schottwand mit Durchbrüchen für den Durchtritt des Scheibenwischers versehen werden muß. Anspruch 4 schlägt daher vor, auf der Fahrerseite auf einen Lufteintritt zu verzichten und lediglich beifahrerseitig einen entsprechend dimensionierten Lufteinlaß vorzusehen.

Während die Windschutzscheibe eines Kraftfahrzeugs in ihrem Mittenbereich naturgemäß etwa von einer in Fahrtrichtung verlaufenden Strömung angeströmt wird und die Luftströmung nahezu vollständig über das Fahrzeugdach abfließt, so daß sich mittig unterhalb der Windschutzscheibe der höchste Staudruck ergibt, erfolgt in den seitlichen Bereichen der Windschutzscheibe mehr und mehr auch eine seitliche Umströmung, da die Luftströmung teilweise in Richtung der Fahrzeugseitenbereiche abfließt. Dadurch stellt sich in Richtung der Fahrzeugaußenseite ein abnehmender Staudruck ein. Durch das Druckgefälle zwischen der Fahrzeugmitte und der Fahrzeugaußenseite entsteht im Bereich unterhalb der Windschutzscheibe eine quer zur Fahrtrichtung verlaufende Luftströmung. Hier setzt die Erfindung gemäß Anspruch 5 ein, indem eine Einrichtung zur Abschottung dieser quer zur Fahrtrichtung verlaufenden Strömung vorgesehen wird. Dadurch wird eine außenliegende Lufteintrittsöffnung von der "Querströmung" isoliert und somit eine deutliche Verringerung der Abhängigkeit des Luftdurchsatzes in der Heizungs- oder Klimaanlage von der Fahrgeschwindigkeit erreicht.

Bei Kraftfahrzeugen, deren Lufteintrittsöffnungen verdeckt im Bereich unterhalb der rückwärtigen Endabschnitte der Frontklappe angeordnet sind, kann die Erfindung gemäß Anspruch 6 in besonders einfacher Weise durch Einbringung einer Querwand in den von der Frontklappe und anderen benachbarten Bauteilen gebildeten Kanal unterhalb der Windschutzscheibe realisiert werden. Diese Kanalunterteilung ist von außerhalb des Fahrzeuges kaum sichtbar und kann mit geringem Aufwand sowohl bei neuen Fahrzeugmodellen vorgesehen als auch bei bestehenden Fahrzeugen nachgerüstet werden.

Selbstverständlich kann zusätzlich zu den Schottwänden gemäß Anspruch 5 und 6 noch eine Abschottung gemäß den Ansprüchen 1, 2 und 3 vorgesehen werden, beispielsweise wenn die Lufteintrittsöffnung nicht ausreichend weit fahrzeugaußenseitig angeordnet ist. Auch werden durch derartige zusätzliche Schottwände Rückströmungen von der Windschutzscheibe und störende Luftverwirbelungen an der Lufteintrittsöffnung unterbunden.

Durch die Ausgestaltung der Erfindung nach Anspruch 7 ergibt sich eine verbesserte Abdichtung des Lufteintrittsbereiches, insbesondere gegenüber einer verlagerbaren Frontklappe.

Je nach Art des Kraftfahrzeuges herrscht unter Umständen auch in den seitlichen Bereichen des Windlaufes noch ein relativ hohes Druckniveau. In solchen Fällen bietet sich die Weiterbildung der Erfindung nach Anspruch 8 an, gemäß der eine Verbindung zu einem Seitenbereich der Karosserie des Kraftfahrzeuges hergestellt wird. Wie allgemein bekannt und auch in der FR 1 165 665 A, Figur 1 anschaulich dargestellt, liegt während der Fahrt des Kraftfahrzeuges an den Seitenflächen der Karosserie ein Unterdruck an. Durch die erfindungsgemäße Ankopplung des Bereiches der Lufteintrittsöffnung mit diesem Seitenbereich (oder einem anderen Bereich mit niedrigem Druckniveau) wird das Druckniveau an der Lufteintrittsöffnung signifikant abgesenkt. Als unterdruckführender Bereich bietet sich beispielsweise der Bereich des Türspaltes an der A-Säule an. Bei Fahrzeugen, insbesondere Sportfahrzeugen, die über Ausnehmungen im seitlichen Bereich der Kotflügel verfügen (sogenannte "Kiemen"), kann auch dieser Bereich des Kotflügels mit dem Lufteintritt verbunden werden. Die Ankopplung an den Seitenbereich der Karosserie erfolgt in der Regel durch entsprechend gestaltete Karosserieteile und Dichtungen. Alternativ zu einem solchen mit entsprechend geformten Karosserieteilen "gebauten" Kanal kann beispielsweise auch ein separates Rohr die Verbindung zum Seitenbereich der Karosserie herstellen.

Ein mögliches Ausführungsbeispiel der Erfindung ist in der Zeichnung dargestellt und wird nachfolgend näher erläutert. Es zeigt:
- Figur 1: eine Draufsicht auf ein Kraftfahrzeug mit einem ersten Ausführungsbeispiel eines erfindungsgemäßen Lufteintritts für eine Heizungs- oder Klimaanlage.
- Figur 2: eine Schnittdarstellung entsprechend der Schnittverlaufslinie II-II in Figur 1.
- Figur 3: eine Schnittdarstellung entsprechend der Schnittverlaufslinie III-III in Figur 1.
- Figur 4: eine Draufsicht auf ein Kraftfahrzeug mit einem zweiten Ausführungsbeispiel eines erfindungsgemäßen Lufteintritts und
- Figur 5: eine Darstellung der Strömungsgeschwindigkeit der aus der Heizungsoder Klimaanlage austretenden Luft. ohne bzw. mit erfindungsgemäß ausgebildetem Lufteintritt. in Abhängigkeit von der Fahrzeuggeschwindigkeit.

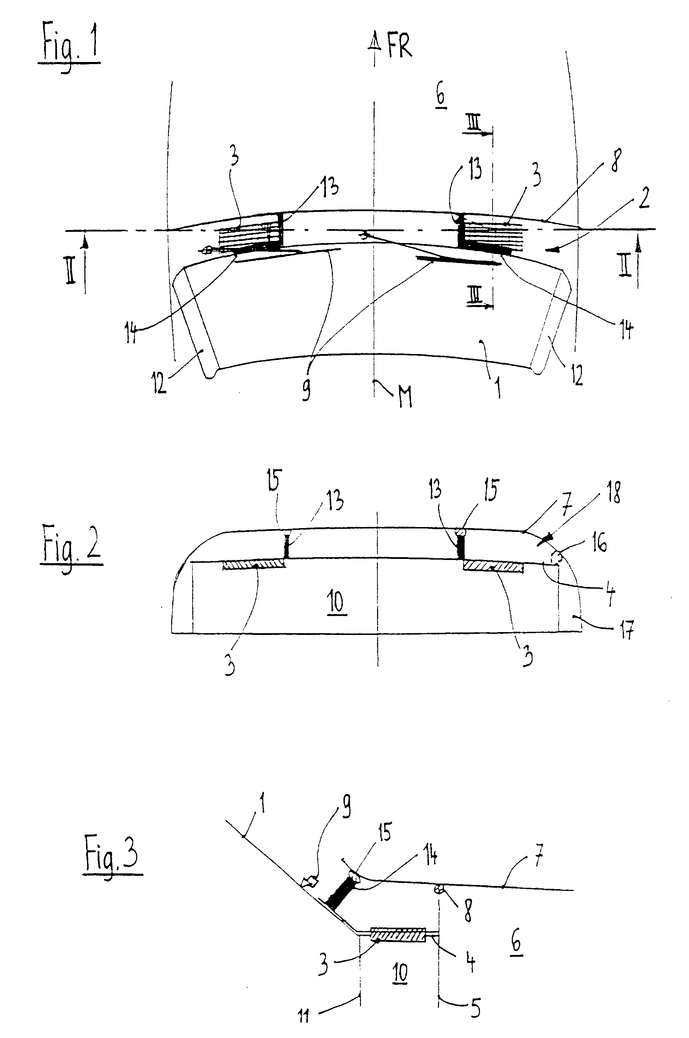

Figur 1 zeigt den vorderen Bereich eines Kraftfahrzeuges (ohne Frontklappe 7) in der Draufsicht. Die Fahrtrichtung des Fahrzeuges ist mit dem Pfeil FR gekennzeichnet. Im Bereich unterhalb einer Windschutzscheibe 1 befindet sich der Windlauf 2, mit symmetrisch zur Längsmittenebene M des Fahrzeuges angeordneten Lufteintrittsgittern 3. Der Windlauf 2 wird. wie insbesondere aus Figur 3 näher hervorgeht, von der Windschutzscheibe 1. einer Windlaufblende 4, einer Trennwand 5 zum Motorraum 6 sowie einer in Figur 3 heruntergeklappten Frontklappe 7 begrenzt. Eine Motorraumabdichtung 8 stellt die Abdichtung des Lufteintrittsbereiches gegenüber unerwünschten Emissionen aus dem Motorraum 6 sicher. Im Windlauf 2 sind darüber hinaus Scheibenwischer 9 angeordnet. Unterhalb des Lufteintrittsbereiches befindet sich ein Luftsammelraum 10, der gegenüber dem Fahrzeuginnenraum durch eine vordere Stirnwand 11 begrenzt wird. Die Windschutzscheibe 1 wird seitlich durch die A-Säuien 12 eingefaßt.

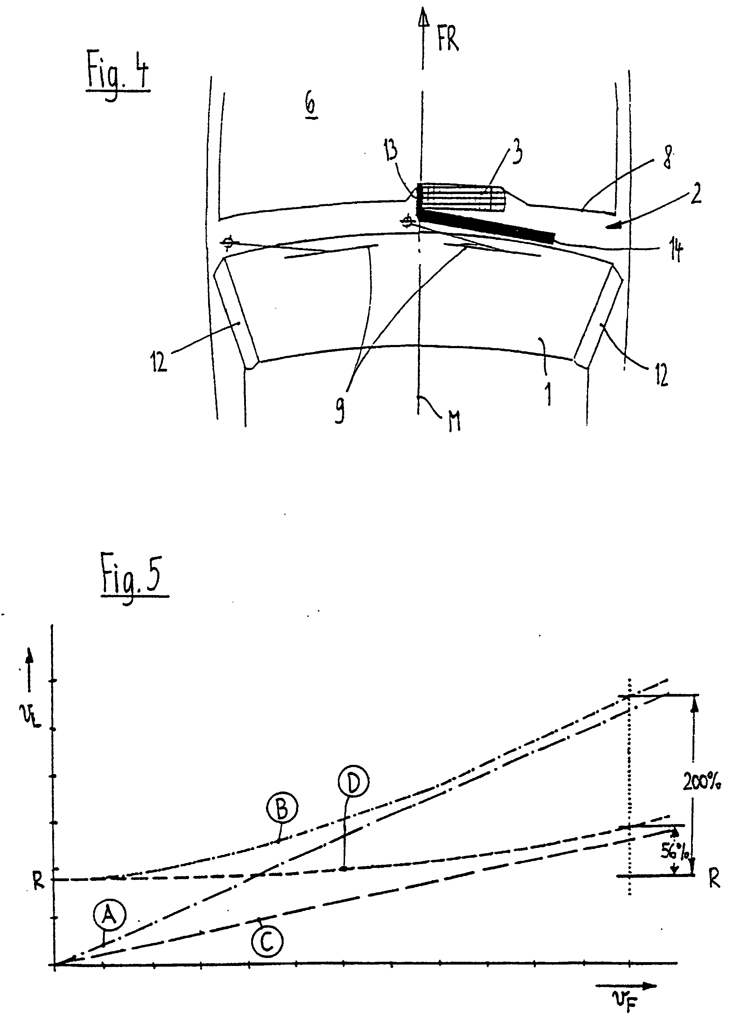

Erfindungsgemäß befindet sich im Windlauf 2 jeweils an den innenliegenden Randbereichen der Lufteintrittsgitter 3 eine etwa parallel zur Längsmittenebene M verlaufende Schottwand 13, durch die der Lufteintrittsbereich von Querströmungen. die sich bei einer Anströmung des Fahrzeuges durch den Fahrtwind im Windlauf 2 einstellen, isoliert wird. Zusätzlich sind etwa senkrecht zur Windschutzscheibe 1 gerichtete Schottwände 14 vorgesehen. Die Schottwände 13 und 14 weisen an ihren der Frontklappe 7 zugewandten Endabschnitten elastische Dichtprofile 15 auf. Damit bilden die Schottwände 13 und 14 zusammen mit der Windlaufblende 4 der Trennwand 5 und der Frontklappe 7 jeweils einen zur Fahrzeugmittenebene M hin geschlossenen "Trichter" für die beiden Lufteintrittsöffnungen 3. Der Lufteintritt kann demzufolge nur mehr über die seitlichen Bereiche 18 des Windlaufes 2 erfolgen. Durch Dichtungen 16 (in Figur 2 gestrichelt eingezeichnet) wird der Windlauf 2 gegenüber einem Seitenbereich 17 der Karosserie, beispielsweise einem Türspalt entlang der A-Säule des Kraftfahrzeuges, isoliert. Bei Kraftfahrzeugen. bei denen auch im Randbereich 18 des Windlaufes 2 ein relativ hoher Staudruck herrscht. kann die Dichtung 16 eine Unterbrechung aufweisen oder völlig fehlen. um die Lufteintrittsöffnung 3 an den unterdruckführenden Seitenbereich 17 der Karosserie anzukoppeln.

In vielen Fällen wird, wie in den Figuren 1 bis 3 dargestellt, der Lufteintrittsbereich möglichst weit fahrzeugaußenseitig angeordnet, da hier ein niedrigeres Druckniveau als im Bereich der Fahrzeugmitte vorliegt. In Figur 4 ist abweichend hiervon ein Ausschnitt eines Fahrzeuges mit einer etwa mittigen Lufteintrittsöffnung 3 dargestellt. Gleiche und gleichwirkende Teile sind hierbei mit denselben Bezugszahlen wie in den vorangegangenen Figuren bezeichnet. Die Schottwände 13 und 14 bilden zusammen mit den Bauteilen des Windlaufes 2 und der in Figur 4 nicht dargestellten Frontklappe einen "Trichter", der lediglich zur rechten Fahrzeugaußenseite hin offen ist. Die Schottwand 14, die den Spalt zwischen der Windschutzscheibe 1 und der Frontklappe verschließt, erstreckt sich dabei über die Breite der Lufteintrittsöffnung 3 hinaus in Richtung der Fahrzeugaußenseite, so daß die Öffnung des "Trichters" in einen Bereich niedrigeren Druckniveaus verlegt wird. Die Lufteintrittsöffnung 3 befindet sich wegen des größeren Freiraums für die Schottwand 14 (Bewegungsbahn des Scheibenwischers 9) auf der Beifahrerseite.

Figur 5 belegt die Wirksamkeit der Erfindung anhand gemessener Kurvenverläufe der Luftgeschwindigkeit v_{L} an Heizluftaustritten im Fahrzeuginnenraum über der Fahrzeuggeschwindigkeit v_{F}. Die Kurvenverläufe A und B geben die Luftgeschwindigkeit v_{L} bei einem herkömmlichen Fahrzeug an. wobei die Kurve A die Abhängigkeit von der Fahrzeuggeschwindigkeit v_{F} bei ausgeschaltetem Gebläse und die Kurve B die entsprechende Abhängigkeit bei eingeschaltetem Gebläse der Heizungs- oder Klimaanlage (Gebläsestufe 1) angibt. Entsprechend spiegeln die Linien C (ohne Gebläse) und D (mit Gebläse) den Verlauf der Luftgeschwindigkeit v_{L} über der Fahrzeuggeschwindigkeit v_{F} bei einem Fahrzeug mit erfindungsgemäßen Schottwänden 13 und 14 gemäß den Figuren 1 bis 3 wieder.

Ausgehend von einem Bezugswert R (entspricht der Luftgeschwindigkeit v_{L} im Stillstand des Fahrzeuges bei Gebläsestufe 1) ergibt sich bei einem herkömmlichen Fahrzeug bei Höchstgeschwindigkeit und eingeschaltetem Gebläse eine Überhöhung von 200 %, während bei einem erfindungsgemäßen Fahrzeug lediglich eine Überhöhung von 56% gemessen wurde. Durch diese signifikante Reduzierung der Luftgeschwindigkeit v_{L} kann auf Zusatzmaßnahmen, insbesondere eine selbsttätig wirkende Stauluftdrosselung, verzichtet werden.

Die Lufteintrittsöffnungen sind allgemein so zu dimensionieren. daß sich ein hinreichend großer Eintrittsquerschnitt für den maximalen Gebläsebetrieb im Stand des Fahrzeuges ergibt. Sollte aufgrund der fahrzeugtypischen Gegebenheiten der Luftdurchsatz trotz des erfindungsgemäßen Einsatzes der Schottwände 13 und 14 insbesondere bei höheren Geschwindigkeiten noch zu groß sein. kann eine Stauluftklappe einfacher Bauart vorgesehen werden, die einen vergleichsweise geringen Kostenaufwand verursacht und mit einer entsprechend einfach aufgebauten Einrichtung zu ihrer Ansteuerung auskommt. Außerdem ergeben sich durch die geringeren Strömungsgeschwindigkeiten in jedem Fall akustische Vorteile.

## Patentansprüche

1. Lufteintritt für eine Heizungs- oder Klimaanlage eines Kraftfahrzeuges, mit wenigstens einer Lufteintrittsöffnung (3), die in einem seitlichen Randbereich unterhalb der Windschutzscheibe (1) angeordnet ist, in dem sich während der Fahrt des Kraftfahrzeuges ein Staudruck einstellt,
**dadurch gekennzeichnet, daß** im Bereich der Lufteintrittsöffnung (3) eine Einrichtung (13, 14) vorgesehen ist, die die Lufteintrittsöffnung (3) gegen ein Gebiet mit relativ hohem Staudruck abschottet und gleichzeitig die Luftzufuhr aus einem Bereich (18) des Kraftfahrzeuges bewirkt, in dem während der Fahrt des Kraftfahrzeuges ein relativ niedriger Druck herrscht.

2. Lufteintritt für eine Heizungs- oder Klimaanlage eines Kraftfahrzeuges, mit wenigstens einer Lufteintrittsöffnung (3), die in einem Bereich unterhalb der Windschutzscheibe (1) angeordnet ist, in dem sich während der Fahrt des Kraftfahrzeuges ein Staudruck einstellt,
**dadurch gekennzeichnet, daß** eine Einrichtung vorgesehen ist, die die Lufteintrittsöffnung (3) gegen ein Gebiet mit relativ hohem Staudruck abschottet und gleichzeitig die Luftzufuhr aus einem Bereich (18) des Kraftfahrzeuges bewirkt, in dem während der Fahrt des Kraftfahrzeuges ein relativ niedriger Druck herrscht, wobei die Einrichtung eine Abdeckung (14) über der Lufteintrittsöffnung (3) aufweist, die lediglich zu einem Seitenbereich der Karosserie des Kraftfahrzeuges hin offen ist.

3. Lufteintritt für eine Heizungs- oder Klimaanlage eines Kraftfahrzeuges, mit wenigstens einer Lufteintrittsöffnung (3), die in einem Bereich unterhalb der Windschutzscheibe (1) angeordnet ist, in dem sich während der Fahrt des Kraftfahrzeuges ein Staudruck einstellt, wobei die Lufteintrittsöffnung (3) in einem halboffenen Kanal angeordnet ist, der von dem in Fahrtrichtung abgewandten Endabschnitt der Frontklappe (7) des Fahrzeuges nach oben hin begrenzt wird,
**dadurch gekennzeichnet, daß** eine Einrichtung vorgesehen ist, die die Lufteintrittsöffnung (3) gegen ein Gebiet mit relativ hohem Staudruck abschottet und gleichzeitig die Luftzufuhr aus einem Bereich (18) des Kraftfahrzeuges bewirkt, in dem während der Fahrt des Kraftfahrzeuges ein relativ niedriger Druck herrscht, wobei die Einrichtung zumindest im Bereich oberhalb der Lufteintrittsöffnung (3) eine Schottwand (14) aufweist, die den Spalt zwischen Windschutzscheibe (1) und Frontklappe (7) zumindest teilweise ausfüllt.

4. Lufteinlaß nach einem der vorgenannten Ansprüche,
**dadurch gekennzeichnet, dass** lediglich im beifahrerseitigen Bereich der Windschutzscheibe (1) eine Lufteintrittsöffnung (3) vorgesehen ist.

5. Lufteintritt für eine Heizungs- oder Klimaanlage eines Kraftfahrzeuges, mit wenigstens einer Lufteintrittsöffnung, die im Bereich unterhalb der Windschutzscheibe seitlich der Fahrzeugmittenebene angeordnet ist,
**dadurch gekennzeichnet, dass** zwischen der Lufteintrittsöffnung (3) und der Fahrzeugmittenebene (M) eine Einrichtung (13) vorgesehen ist, die die Lufteintrittsöffnung (3) gegenüber etwa quer zur Fahrtrichtung (FR) verlaufenden Luftströmungen abschottet.

6. Lufteintritt nach Anspruch 5, wobei die Lufteintrittsöffnung in einem halboffenen Kanal angeordnet ist, der von dem in Fahrtrichtung abgewandten Endabschnitt der Frontklappe des Fahrzeuges nach oben hin begrenzt wird,
**dadurch gekennzeichnet, daß** die Einrichtung von einer den Kanalquerschnitt ausfüllenden, etwa parallel zur Mittenebene (M) verlaufenden Schottwand (13) gebildet wird.

7. Lufteintritt nach einem der vorangegangenen Ansprüche,
**dadurch gekennzeichnet, daß** die Einrichtung (13, 14) in dem Bereich, in dem verlagerbare Anschlußteile (7) an die Einrichtung (13, 14) angrenzen, mit einer Dichteinrichtung (15) versehen ist.

8. Lufteintritt nach einem der vorangegangenen Ansprüche,
**dadurch gekennzeichnet, daß** die Lufteintrittsöffnung (3) mit einem solchen Bereich (17) des Kraftfahrzeuges in Verbindung steht, in dem sich bei Fahrt des Kraftfahrzeuges ein Unterdruck einstellt.

## Claims

1. An air inlet for a heating or air-conditioning unit in a motor vehicle, comprising at least one air inlet opening (3) disposed in a lateral edge region underneath the windscreen (1), where a head of pressure builds up when the vehicle is in motion,
**characterised in that** a device (13, 14) provided in the neighbourhood of the air inlet opening (3) shuts off the air inlet opening (3) from an area with a relatively high pressure head and simultaneously supplies air from a region (18) of the vehicle where the pressure is relatively low while the vehicle is in motion.

2. An air inlet for a heating or air-conditioning unit in a motor vehicle comprising at least one air inlet opening (3) disposed in a region underneath the windscreen (1) in which a head of pressure builds up while the vehicle is in motion,
**characterised in that** a device is provided and shuts the air inlet opening (3) off from an area with a relatively high pressure head and simultaneously supplies air from a region (18) of the vehicle in which the pressure is relatively low when the vehicle is in motion, the device comprising a cover (14) over the air inlet opening (3), which is open only towards a side region of the vehicle body.

3. An air inlet for a heating or air-conditioning unit of a motor vehicle comprising at least one air inlet opening (3) disposed in a region underneath the windscreen (1) in which a head of pressure builds up when the vehicle is in motion, wherein the air inlet opening (3) is disposed in a half-open duct bounded upwards by the remote end portion, in the direction of travel, of the vehicle bonnet (7),
**characterised in that** a device is provided which shuts the air inlet opening (3) off from an area with a relatively high pressure head and simultaneously supplies air from a region (18) of the vehicle where the pressure is relatively low while the vehicle is in motion, wherein the device, at least in the region above the air inlet opening (3), has a partition wall (14) which at least partly fills the gap between the windscreen (1) and the bonnet (7).

4. An air inlet according to any of the preceding claims,
**characterised in that** an air inlet opening (3) is provided only in the region of the windscreen (1) on the passenger side.

5. An air inlet for a heating or air-conditioning unit in a motor vehicle comprising at least one air inlet opening disposed in the region underneath the windscreen at the side of the central plane of the vehicle,
**characterised in that** a device (13) provided between the air inlet opening (3) and the sensor plane (M) of the vehicle shuts the air inlet opening (3) off from air flowing substantially transversely of the direction of travel (FR).

6. An air inlet according to claim 5, wherein the air inlet opening is disposed in a half-open duct bounded upwards by the remote end portion, in the direction of travel, of the vehicle bonnet,
**characterised in that** the device is a partition wall (13) which fills the duct cross-section and is approximately parallel to the centre plane (M).

7. An air inlet according to any of the preceding claims,
**characterised in that** the device (13, 14) is provided with a seal (15) in the region in which movable connecting parts (7) are next to the device (13, 14).

8. An air inlet according to any of the preceding claims,
**characterised in that** the air inlet opening (3) is connected to a region (17) of the vehicle which is at negative pressure when the vehicle is in motion.

## Revendications

1. Entrée d'air pour un système de chauffage ou de climatisation d'un véhicule automobile, comportant au moins une ouverture d'entrée d'air (3) qui est disposée dans une zone marginale latérale en dessous du pare-brise (1), dans laquelle une pression dynamique s'établit pendant la marche du véhicule automobile,
**caractérisée en ce qu'**
il est prévu, dans la zone de l'ouverture d'entrée d'air (3), un dispositif (13, 14) qui cloisonne l'ouverture d'entrée d'air (3) contre une région à pression dynamique relativement élevée et produit simultanément l'amenée d'air à partir d'une zone (18) du véhicule automobile dans laquelle une pression relativement basse règne pendant la marche du véhicule automobile.

2. Entrée d'air pour un système de chauffage ou de climatisation d'un véhicule automobile, comportant au moins une ouverture d'entrée d'air (3) qui est disposée dans une zone en dessous du pare-brise (1), dans laquelle une pression dynamique s'établit pendant la marche du véhicule automobile,
**caractérisée en ce qu'**
il est prévu un dispositif qui cloisonne l'ouverture d'entrée d'air (3) contre une région à pression dynamique relativement élevée et produit simultanément l'amenée d'air à partir d'une zone (18) du véhicule automobile dans laquelle une pression relativement basse règne pendant la marche du véhicule automobile, le dispositif présentant un recouvrement (14) de l'ouverture d'entrée d'air (3) qui est ouvert seulement vers une zone latérale de la carrosserie du véhicule automobile.

3. Entrée d'air pour un système de chauffage ou de climatisation d'un véhicule automobile, comportant au moins une ouverture d'entrée d'air (3) qui est disposée dans une zone en dessous du pare-brise (1), dans laquelle une pression dynamique s'établit pendant la marche du véhicule automobile, l'ouverture d'entrée d'air (3) étant disposée dans un canal à moitié ouvert qui est délimité vers le haut par le segment d'extrémité, tourné dans la direction de marche, du capot avant (7) du véhicule,
**caractérisée en ce qu'**
il est prévu un dispositif qui cloisonne l'ouverture d'entrée d'air (3) contre une région à pression dynamique relativement élevée et produit simultanément l'amenée d'air à partir d'une zone (18) du véhicule automobile dans laquelle une pression relativement basse règne pendant la marche du véhicule automobile, le dispositif présentant, au moins dans la zone au-dessus de l'ouverture d'entrée d'air (3), une cloison (14) qui comble au moins en partie l'intervalle ente le pare-brise (1) et le capot avant (7).

4. Entrée d'air selon l'une des revendications précédentes,
**caractérisée en ce qu'**
une ouverture d'entrée d'air (3) est prévue seulement dans la zone côté passager du pare-brise (1).

5. Entrée d'air pour un système de chauffage ou de climatisation d'un véhicule automobile, comportant au moins une ouverture d'entrée d'air qui est disposée dans la zone en dessous du pare-brise latéralement par rapport au plan médian du véhicule,
**caractérisée en ce qu'**
il est prévu entre l'ouverture d'entrée d'air (3) et le plan médian du véhicule M, un dispositif (13) qui cloisonne l'ouverture d'entrée d'air (3) par rapport aux écoulements d'air approximativement perpendiculaires à la direction de la marche (FR).

6. Entrée d'air selon la revendication 5, dans laquelle l'ouverture d'entrée d'air est disposée dans un canal à moitié ouvert, qui est délimité vers le haut par le segment d'extrémité, tourné dans la direction de marche, du clapet avant du véhicule,
**caractérisée en ce que**
le dispositif est formé par une cloison (13) remplissant la section du canal, s'étendant de manière approximativement parallèle au plan médian (M).

7. Entrée d'air selon l'une des revendications précédentes,
**caractérisée en ce que**
le dispositif (13, 14) est muni d'un dispositif d'étanchéité (15) dans la zone dans laquelle des pièces de raccordement amovibles (7) sont adjacentes au dispositif (13, 14).

8. Entrée d'air selon l'une des revendications précédentes,
**caractérisée en ce que**
l'ouverture d'entrée d'air (3) est en liaison avec une zone (17) du véhicule automobile dans laquelle une dépression s'établit pendant la marche du véhicule automobile.
